**Europäisches Patentamt**

**European Patent Office**

**Office européen des brevets**

(19)

(11) Veröffentlichungsnummer: **0 214 934**
**B1**

(12) **EUROPÄISCHE PATENTSCHRIFT**

(45) Veröffentlichungstag der Patentschrift:
25.07.90

(51) Int. Cl.⁵: **C02F 1/04, B01D 3/06,**
**B01D 1/26**

(21) Anmeldenummer: **86810395.3**

(22) Anmeldetag: **02.09.86**

(54) **Verdampfungseinrichtung und Anlage mit solchen Verdampfungseinrichtungen zum Entsalzen von Meerwasser.**

(30) Priorität: **05.09.85 CH 3827/85**

(43) Veröffentlichungstag der Anmeldung:
**18.03.87 Patentblatt 87/12**

(45) Bekanntmachung des Hinweises auf die Patenterteilung:
**25.07.90 Patentblatt 90/30**

(84) Benannte Vertragsstaaten:
**DE FR GB IT NL**

(56) Entgegenhaltungen:
**EP-A- 0 024 701**
**CH-A- 645 601**

(73) Patentinhaber: **Atlantis Energie AG, Brüggliweg 18,**
**CH-3073 Gümligen (BE)(CH)**

(72) Erfinder: **Kriesi, Ruedi, Bodenacherstrasse 47,**
**CH-8121 Benglen(CH)**
Erfinder: **Posnansky, Mario, Melchenbühlweg 18,**
**CH-3006 Bern(CH)**

(74) Vertreter: **Schweizer, Hans et al, Bovard AG**
**Patentanwälte VSP Optingenstrasse 16,**
**CH-3000 Bern 25(CH)**

**Beschreibung**

Die Erfindung betrifft eine Verdampfungseinrichtung gemäss dem Oberbegriff des Patentanspruches I und eine Anlage mit derartigen Verdampfungseinrichtungen gemäss dem Oberbegriff des Patentanspruches 8.

Derartige Verdampfungseinrichtungen sind beispielsweise in der CH-A-645 601 beschrieben. Diese bekannten Verdampfungseinrichtungen weisen je eine Verdampfungszone in einer ersten Kammer zur Aufnahme des Meerwassers, eine zweite Kammer zum Aufnehmen des über den Rand der ersten Kammer überströmenden Meerwassers und eine Kondensierungszone in einer dritten Kammer zum Sammeln des Destillates auf. In den unteren Bereich der ersten Kammer mündet ein Eingangsrohr zum Zuführen des Meerwassers ein und im unteren Bereich der zweiten Kammer ist ein Ausgangsrohr zum Abführen des in die zweite Kammer übergeströmten Meerwassers vorhanden. Im unteren Bereich der dritten Kammer ist eine Ausgangsleitung zum Abführen des Destillates vorgesehen.

Die Höhe der zweiten Kammer ist grösser als die Flüssigkeitssäule, welche dem Druckunterschied zwischen einer nachfolgenden und der vorgeschalteten, wie oben beschriebenen, Verdampfungseinrichtung entspricht, wobei auch die Temperaturdifferenz zwischen diesen beiden Verdampfungseinrichtungen berücksichtigt werden muss. Zum Ueberführen des Destillates aus der dritten Kammer der oben beschriebenen Verdampfungseinrichtung in die dritte Kammer einer nachfolgenden Verdampfungseinrichtung ist die Ausgangsleitung zum Abführen des Destillates über eine U-förmige Rohrleitung, d.h. einen Siphon, mit der dritten Kammer der nachfolgenden Verdampfungseinrichtung verbunden, wobei die Höhe des Siphons grösser ist als die oben angeführte Flüssigkeitssäule.

Im Betrieb der Verdampfungseinrichtung entstehen in der ersten Kammer, d.h. der Verdampfungskammer, aufsteigende Dampfbläschen. Diese Dampfbläschen beeinflussen das spezifische Gewicht jenes Teils der Flüssigkeit, die sich in der Verdampfungskammer befindet, wodurch bei nicht konstanter Energiezufuhr eine Unstabilität entsteht, was sich durch Schwankungen der Höhendifferenz zwischen dem Flüssigkeitsspiegel in der Verdampfungskammer und jenem in der zweiten Kammer auswirkt und einerseits zu einem unstabilen Betrieb führen kann und andererseits einen relativ grossen Sicherheitszuschuss für die Höhe der zweiten Kammer und des genannten Siphons bedingt, was sich in der Bauhöhe der Verdampfungseinrichtung ungünstig auswirkt.

Es ist Aufgabe der Erfindung, eine Verdampfungseinrichtung zu schaffen, die einen stabilen Betrieb auch bei schwankender Energiezufuhr gewährleistet und deren Bauhöhe kleiner ist als jene der bekannten Verdampfungseinrichtungen.

Die erfindungsgemässe Verdampfungseinrichtung ist durch die im kennzeichnenden Teil des Patentanspruches I angeführten Merkmale gekennzeichnet.

Die erfindungsgemässe Anlage mit derartigen Verdampfungseinrichtungen ist im Patentanspruch 8 angegeben.

Die Erfindung ist nachstehend mit Bezugnahme auf die Zeichnungen beispielsweise näher erläutert. Es zeigen:

Fig. I einen Teil einer Anlage mit erfindungsgemässen Verdampfungseinrichtungen in schematischer Darstellung,

Fig. 2 ein erstes Ausführungsbeispiel der erfindungsgemässen Verdampfungseinrichtung im Schnitt,

Fig. 3 einen Schnitt entlang der Linie III-III der Fig. 2,

Fig. 4 ein zweites Ausführungsbeispiel der erfindungsgemässen Verdampfungseinrichtung im Schnitt,

Fig. 5 ein drittes Ausführungsbeispiel der erfindungsgemässen Verdampfungseinrichtung, wobei eine Anordnung von vier solcher Verdampfungseinrichtungen in der Ansicht dargestellt ist,

Fig. 6 einen Schnitt entlang der Linie VI-VI der Fig. 5,

Fig. 7 einen Schnitt entlang der Linie VII-VII der Fig. 6, und

Fig. 8 einen Schnitt entlang der Linie VIII-VIII der Fig. 6.

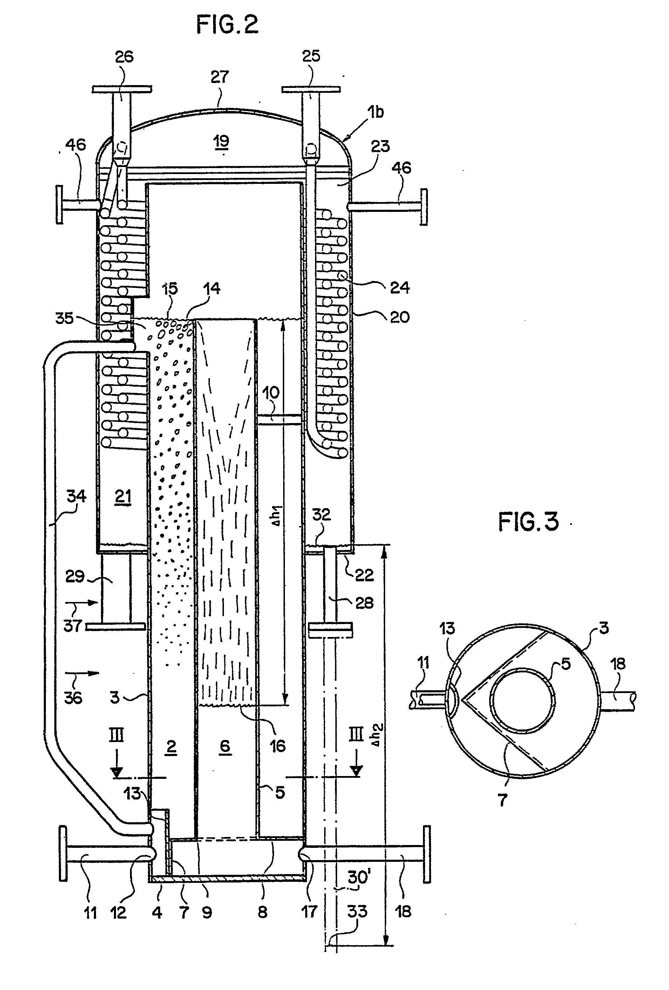

Die Fig. I zeigt eine Anlage mit einer Anzahl, beispielsweise zwölf, erfindungsgemässen Verdampfungseinrichtungen in schematischer Darstellung. Es sind jedoch nur die beiden ersten Verdampfungseinrichtungen Ia, Ib und die beiden letzten Verdampfungseinrichtungen Ic, Id dargestellt. Die Fig. 2 zeigt die zweite Verdampfungseinrichtung Ib im Schnitt. Jede der Verdampfungseinrichtungen Ia, Ib, Ic und Id der Anlage gemäss der Fig. I ist prinzipiell gleich aufgebaut, wobei lediglich die Höhen der einzelnen Teile unterschiedlich sein können.

Die Verdampfungseinrichtung Ib weist eine erste Kammer 2, nachfolgend als Verdampfungskammer bezeichnet, auf. Die Verdampfungskammer 2 ist nach aussen durch ein zylindrisches Rohr 3 begrenzt und der untere Teil desselben ist mit einer Platte 4 abgeschlossen. Im Innern der Verdampfungskammer 2 ist eine durch ein Rohr 5 begrenzte zweite Kammer 6, nachstehend als Fallkammer bezeichnet, konzentrisch angeordnet.

Auf der Platte 4 ist eine abgewinkelte Scheidewand 7 aufgesetzt, siehe auch Fig. 3. Ueber der Scheidewand 7 befindet sich eine Abdeckplatte 8 mit einer kreisrunden Aussparung 9, die koaxial zum Rohr 3 angeordnet ist. Das die Fallkammer 6 begrenzende Rohr 5 erstreckt sich von der Aussparung 9 gegen den oberen Bereich der Verdampfungskammer 2. Der obere Endbereich des Rohres 5 ist über eine Strebe I0 mit dem Rohr 3 verbunden und wird durch diese Strebe I0 in koaxialer Lage zum Rohr 3 gehalten.

Ueber ein Eingangsrohr II wird die zu verdampfende erwärmte Flüssigkeit einem Eingang I2 im unteren Bereich der Verdampfungskammer 2 zugeführt. Innerhalb der Verdampfungskammer 2 und benachbart zum Eingang I2 kann ein Leitblech I3 zum

Verbessern der Eintrittsströmung angeordnet sein. Die Flüssigkeit steigt in der, im Querschnitt betrachtet, ringförmigen Verdampfungskammer 2 unter Bildung von Dampfblasen 14 hoch, bis etwas über den Rand des die Fallkammer 6 begrenzenden Rohres 5. Vom Flüssigkeitsspiegel 15 fällt danach die Flüssigkeit bis auf einen Flüssigkeitsspiegel 16 innerhalb der Fallkammer 6. Die Höhendifferenz Δ h₁ entspricht der Druckdifferenz innerhalb der Verdampfungseinrichtung 1b und der nachfolgenden, in Fig. 2 nicht dargestellten Verdampfungseinrichtung 1c. Von der Fallkammer 6 gelangt danach die Flüssigkeit in den durch die abgewinkelte Scheidewand 7, die Abdeckplatte 8 und die Platte 4 begrenzten Raum und durch einen Ausgang 17 in ein Ausgangsrohr 18.

Der über den Flüssigkeitsspiegel 15 austretende Dampf wird im oberen Bereich der Verdampfungskammer 2 und in einer darüber angeordneten dritten Kammer 19, nachstehend mit Dampfsammelkammer bezeichnet, aufgefangen bzw. gesammelt. Der obere Teil des die Verdampfungskammer 2 begrenzenden Rohres 3 ist von einem zylindrischen Mantel 20 umgeben. Die ringförmige Kondensationskammer 21 zwischen dem Rohr 3 und dem Mantel 20 ist auf ihrer Unterseite durch eine kreisringförmige Platte 22 abgeschlossen, während das obere Ende der Kondensationskammer 21 über eine kreisringförmige Oeffnung 23 mit der Dampfsammelkammer 19 in Verbindung steht. Innerhalb der Kondensationskammer 21 befindet sich ein Wärmeaustauscher in der Form einer Kühlschlange 24. Genau betrachtet umfasst der Wärmeaustauscher zwei schraubenlinienförmig gewickelte Kühlschlangen, die konzentrisch zueinander angeordnet sind und deren gleichliegende Enden in ein Einlassrohr 25 bzw. ein Auslassrohr 26 münden. Das Einlassrohr 25 und das Auslassrohr 26 erstrecken sich durch eine die Dampfsammelkammer 19 teilweise begrenzende Haube 27. Die Kühlschlange 24 erfüllt zwei Aufgaben, einerseits wird durch sie der Dampf kondensiert, wobei sich das Destillat über dem durch die kreisringförmige Platte 22 gebildeten Boden der Kondensationskammer 21 sammelt, und andererseits wird mit der bei der Kondensation des Dampfes freiwerdenden Wärme die zu verdampfende Flüssigkeit, die durch das Einlassrohr 25 der Kühlschlange 24 zugeführt und derselben über das Auslassrohr 26 entnommen wird, vorgewärmt.

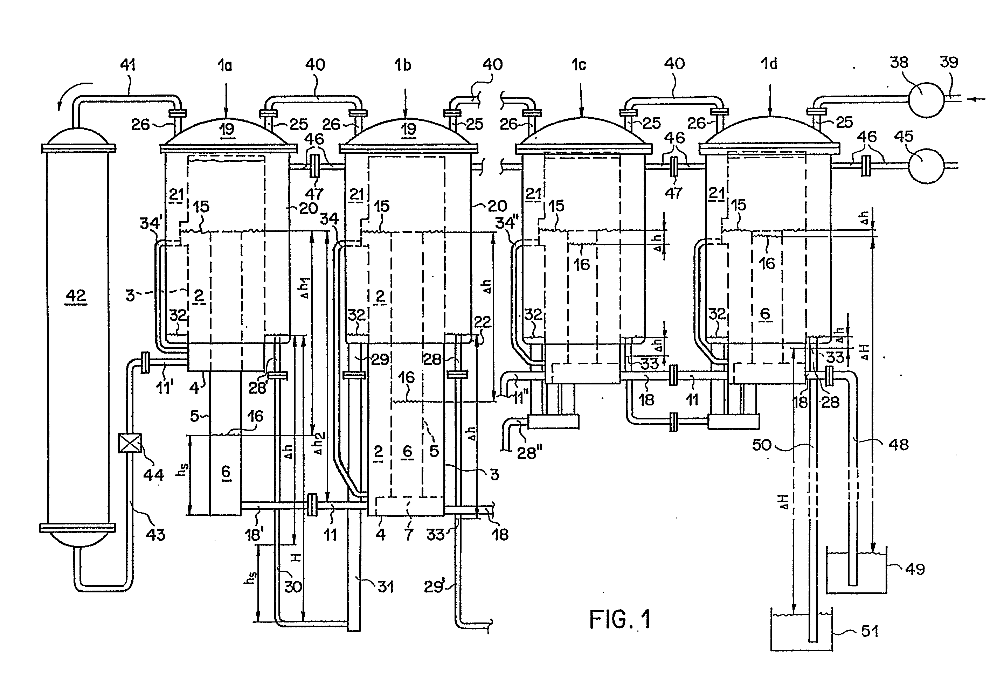

Das Destillat wird der Kondensationskammer 21 über ein die kreisringförmige Platte 22 durchsetzendes Auslaufrohr 28 entnommen, welches etwas über die kreisringförmige Platte 22 in das Innere der Kondensationskammer 21 vorsteht. Das über das Auslaufrohr 27' der vorangehenden Verdampfungseinrichtung entnommene Destillat wird der Kondensationskammer 21 über einen in der Fig. 1 dargestellten, durch zwei Rohrleitungen 30 und 31 gebildeten Siphon und über ein Einlaufrohr 29 zugeführt. Das aus der Kondensationskammer 21 in das Auslaufrohr 28 gelangende Destillat fällt von einem Destillationsspiegel 32 auf einen Destillationsspiegel 33 innerhalb der in der Fig. 2 strichpunktiert dargestellten Rohrleitung 30' des nachfolgenden Siphons. Der Höhenunterschied Δ h₂ zwischen den beiden Destillatspiegeln 32 und 33 entspricht wiederum dem Druckunterschied zwischen der Verdampfungseinrichtung 1b und der nachfolgenden, nicht dargestellten Verdampfungseinrichtung. Die Höhendifferenz Δ h₂ ist im allgemeinen etwas grösser als die Höhendifferenz Δ h₁ und zwar im umgekehrten Verhältnis der spezifischen Gewichte der zu verdampfenden Flüssigkeit und des Destillates. Damit die beim Betrieb mit unterschiedlicher Energie auftretenden Druckschwankungen nicht zu einem Unterbruch des Betriebes führen, ist die Gesamthöhe H des aus den Rohrleitungen 30 und 31 gebildeten Siphons sicherheitshalber grösser als die Höhendifferenz Δ h₂ (siehe Fig. 1).

Zum Kleinhalten der Ueberhöhung des Siphons aus Sicherheitsgründen, und zum Unterdrücken der in Abhängigkeit von der Dampfbläschenbildung auftretenden Schwankungen des spezifischen Gewichtes der zu verdampfenden Flüssigkeit innerhalb der Verdampfungskammer 2, ist ein Rückführkanal 34 vorgesehen, welcher von einer Ausbuchtung 35 der Verdampfungskammer 2 in den unteren Bereich derselben in die Nachbarschaft der Oeffnung 12 führt. Die Einmündung des Rückführkanals 34 in den unteren Bereich der Verdampfungskammer 2 ist so ausgebildet, dass die Flüssigkeit, die sich im Rückführkanal 34 befindet, durch die Strömung der durch die Oeffnung 12 eingeführten Flüssigkeit nach oben in die Verdampfungskammer 2 mitgerissen wird. Weil das obere Ende des Rückführkanals sich in der dampfbläschenfreien Ausbuchtung 35 befindet, gelangen keine Dampfbläschen in den Rückführkanal 34. Die erwärmte, zum Verdampfen bestimmte Flüssigkeit wird der Verdampfungskammer 2 über das Eingangsrohr 11 und den Eingang 12 zugeführt und strömt innerhalb der Verdampfungskammer 2 nach oben. Auf dem mit einem Pfeil 36 angezeigten Niveau beginnt die Verdampfung und die Flüssigkeit beginnt sich abzukühlen. Bei Erreichen des freien Flüssigkeitsspiegels 15 ist die Verdampfung praktisch abgeschlossen, d.h. die Flüssigkeit befindet sich fast bei Sättigungstemperatur. Ein Teil der abgekühlten Flüssigkeit strömt durch den Rückführkanal 34 wieder hinunter in den Eingangsbereich der Verdampfungskammer 2, wo sie sich mit der eintretenden wärmeren Flüssigkeit vermischt. Durch diese Abkühlung der eintretenden Flüssigkeit mittels der durch den Rückführkanal 34 rückströmenden Flüssigkeit steigt das Niveau des Verdampfungsbeginns von dem durch den Pfeil 36 angegebenen Niveau auf das durch einen Pfeil 37 angegebene Niveau. Die Rückströmung durch den Rückführkanal 34 wird zusätzlich angetrieben durch die Dichtedifferenz zwischen der Flüssigkeits-Dampf-Säule innerhalb der Verdampfungskammer 2 und der reinen Flüssigkeitssäule im Rückführkanal 34. Diese Dichtedifferenz liefert ebenfalls einen Energiebeitrag zur Beschleunigung der Flüssigkeit und des Dampfes innerhalb der Verdampfungskammer 2 bei fortschreitender Verdampfung. Da die Verdampfung bei Erreichen des Flüssigkeitsspiegels 15 im oberen Bereich der Verdampfungskammer praktisch abgeschlossen ist, ist die Dampfaustrittsgeschwindigkeit hoch. Zudem wird die Flüssigkeit durch den aufsteigenden Dampf beschleunigt, obwohl, je nach Form der Verdampfungskammer 2, ein grosser Schlupf zwischen Dampf- und Flüssigkeitsphase bestehen kann.

Der Vollständigkeit halber ist nachstehend die Arbeitsweise der in der Fig. I gezeigten Anlage kurz beschrieben, welche Anlage zum Entsalzen von Meerwasser dient. Mittels einer Speisepumpe 38 wird Meerwasser über eine Rohrleitung 39 angesogen und der Kühlschlange der letzten Verdampfungseinrichtung Id über das Einlassrohr 25 zugeführt. Jedes Auslassrohr 26 der nachfolgenden Verdampfungseinrichtungen ist mit dem Einlassrohr 25 der vorangehenden Verdampfungseinrichtung über je ein Verbindungsrohr 40 verbunden. Das Meerwasser wird also der Reihe nach durch die Kühlschlangen aller Verdampfungseinrichtungen Id bis Ia geführt und dabei in jeder der Verdampfungseinrichtungen als Kühlmittel verwendet und gleichzeitig vorgewärmt. Von der ersten Verdampfungseinrichtung Ia gelangt das vorgewärmte Meerwasser über ein Anschlussrohr 4I in eine Heizeinrichtung 42, in welcher das Meerwasser noch weiter erwärmt wird. Die Heizeinrichtung 42 kann mittels elektrischer Energie, Brennstoff-Energie oder Sonnenenergie betrieben werden.

Das in der Heizeinrichtung 42 erhitzte Meerwasser gelangt über ein Speiserohr 43, ein Ventil 44 und das Eingangsrohr II' in die Verdampfungskammer 2 der ersten Verdampfungseinrichtung Ia. Das aus der Verdampfungskammer 2 in die Fallkammer 6 der Verdampfungseinrichtung Ia fallende Meerwasser gelangt dann über das Ausgangsrohr I8' und das Eingangsrohr II der zweiten Verdampfungseinrichtung Ib in die Verdampfungskammer 2 derselben, usw.

Der zum Verdampfen des Meerwassers notwendige Unterdruck in den Verdampfungseinrichtungen Ia, Ib, Ic und Id wird mittels einer Vakuumpumpe 45 erzeugt. Zu diesem Zweck sind die Kondensationskammern 2I aller Verdampfungseinrichtungen über Rohrleitungen 46 untereinander und mit der Vakuumpumpe 45 verbunden. In den Verbindungsstellen 47 der Rohrleitungen 46 zwischen zwei benachbarten Verdampfungseinrichtungen ist je ein nicht dargestelltes Drosselorgan eingebaut, welches dafür sorgt, dass der Unterdruck in der letzten Verdampfungseinrichtung Id grösser ist als in den vorangehenden Verdampfungseinrichtungen. Die Drosselorgane haben weiter zur Folge, dass nicht zuviel von dem Dampf zusammen mit den nicht kondensierbaren Gasen von der vorangehenden Verdampfungseinrichtung in die nachfolgende Verdampfungseinrichtung gelangt.

An das Ausgangsrohr I8 der letzten Verdampfungseinrichtung Id ist ein langes Steigrohr 48 angeschlossen. Durch das Steigrohr 48 wird das mit Salzen angereicherte Meerwasser bzw. die Sole aus der Anlage herausgeführt und in ein symbolisch dargestelltes Auffangbecken 49 geleitet. Das untere Ende des Steigrohres 48 taucht in die in dem Auffangbecken 49 vorhandene Sole ein. Die Höhendifferenz Δ H zwischen dem Flüssigkeitsspiegel in dem Auffangbecken 49 und dem Flüssigkeitsspiegel I6 in dem Fallraum 6 der letzten Verdampfungseinrichtung Id beträgt etwa I0 m. Das Auslaufrohr 28 für das Destillat der letzten Verdampfungseinrichtung Id ist ebenfalls an ein langes Steigrohr 50 angeschlossen. Das untere Ende des Steigrohres 50 mündet in einen Auffangbehälter 5I für das destillierte Wasser. Die Höhedifferenz Δ H zwischen dem Wasserspiegel im Auffangbehälter 5I und dem Wasserspiegel 32 in der Kondensationskammer 2I der letzten Verdampfungseinrichtung Id beträgt ebenfalls etwa I0 m.

Die in der Fig. I durch Wellenlinien angedeuteten Flüssigkeitsspiegel I5, I6, 32 und 33 gelten für den Betriebszustand mit der grössten Dauerleistung der Anlage. In diesem Betriebszustand treten auch die grössten Druckunterschiede zwischen benachbarten Verdampfungseinrichtungen auf. Durch das Vorsehen des erfindungsgemässen Rückführkanals 34 wird der unterste Flüssigkeitsspiegelstand in den Fallkammern 6 und den Rohrleitungen 30 insbesondere der ersten Verdampfungseinrichtungen stabilisiert und durch die Dampfbläschenbildung praktisch nicht beeinflusst. Dies bedeutet, dass die Sicherheitshöhe Δ $h_s$, siehe bei der ersten Verdampfungseinrichtung Ia in der Fig. I, klein gehalten werden kann, ohne dass dadurch ein Betriebsunterbruch provoziert wird. Dies hat zur Folge, dass die Bauhöhe der Verdampfungseinrichtungen reduziert werden kann.

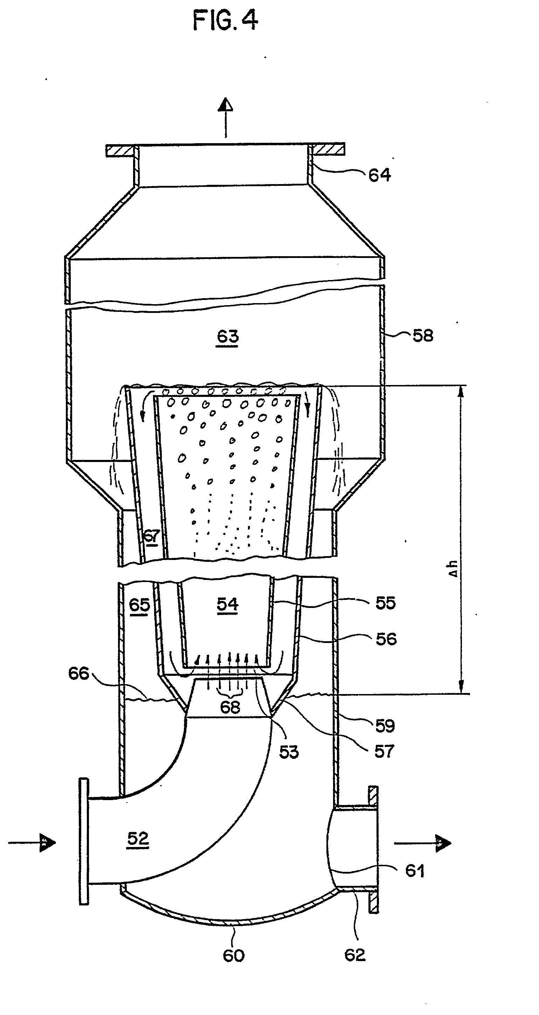

Die Fig. 4 zeigt ein zweites Ausführungsbeispiel der erfindungsgemässen Verdampfungseinrichtung im Schnitt, wobei die dritte Kammer, d.h. die Kondensationskammer, nicht dargestellt ist. Ueber ein etwa um 90° gebogenes Eingangsrohr 52 wird die zu verdampfende Flüssigkeit in die dargestellte Verdampfungseinrichtung eingeführt. Das innere Ende des Eingangsrohres 52 ist verjüngt, so dass die Flüssigkeit mit erhöhter Geschwindigkeit in den Eingang 53 einer sich nach oben erweiternden Verdampfungskammer 54 eintreten kann. Die die Verdampfungskammer 54 begrenzende Wand 55 ist kegelstumpfförmig ausgebildet und befindet sich konzentrisch in einem weiteren kegelstumpfförmigen Hohlkörper 56 und wird darin durch nicht gezeichnete Streben gehalten. Der untere Teil des Hohlkörpers 56 ist über ein konisches Anschlussstück 57 starr mit dem inneren Ende des Eingangsrohres 52 abdichtend verbunden. Das obere Ende des Hohlkörpers 56 ragt über das obere Ende der die Verdampfungskammer 54 begrenzenden Wand 55 hinaus. Der Hohlkörper 56 ist von einem zwei Abschnitte 58, 59 aufweisenden Rohr umgeben. Der untere Rohrabschnitt 59 ist mit einem gekrümmten Boden 60 abgeschlossen und weist einen Ausgang 6I auf, an den sich ein Ausgangsrohr 62 anschliesst. Der obere Rohrabschnitt 58 weist einen grösseren Durchmesser auf als der untere Rohrabschnitt 59 und begrenzt eine Dampfsammelkammer 63. Ueber einen Rohransatz 64 gelangt der Dampf in eine nicht dargestellte, oberhalb der Dampfkammer 63 angeordnete Kondensationskammer.

Der ringförmige Raum zwischen dem unteren Rohrabschnitt 59 und einem Teil des oberen Rohrabschnittes 58 bildet eine Fallkammer 65, in welcher die über den oberen Rand des Hohlkörpers 56 überfliessende Flüssigkeit auf einen Flüssigkeitsspiegel 66 hinunterfällt, wobei der Höhenunterschied Δ h zwischen dem durch den oberen Rand des Hohlkörpers 56 bestimmten Flüssigkeitsspiegel 67 und dem Flüssigkeitsspiegel 66 in der Fallkammer 65 durch den Druckunterschied zwischen der in der Fig. 4 dargestellten Verdampfungseinrichtung und der nachfolgenden Verdampfungseinrichtung abhängig ist.

Der ringförmige Raum zwischen dem Hohlkörper 56 und der Wand 55 der Verdampfungskammer 54 bildet einen Rückführkanal 67, über den ein Teil der dampfbläschenfreien Flüssigkeit nach unten strömt und durch die mit Pfeilen 68 angedeutete Strömung erhöhter Geschwindigkeit mit in die Verdampfungskammer 54 gerissen wird. Dabei treten die in der weiter oben mit Bezug auf die Fig. 2 beschriebene Verdampfungseinrichtung angegebenen Wirkungen auf.

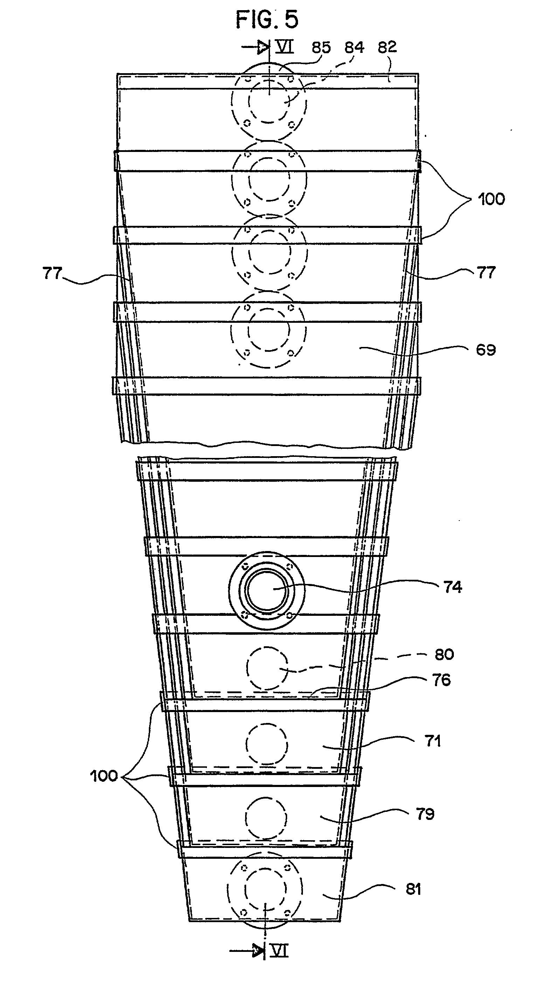

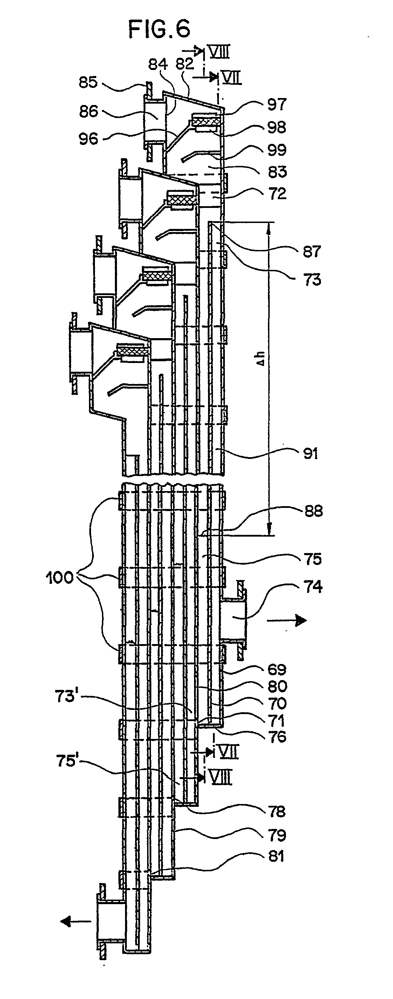

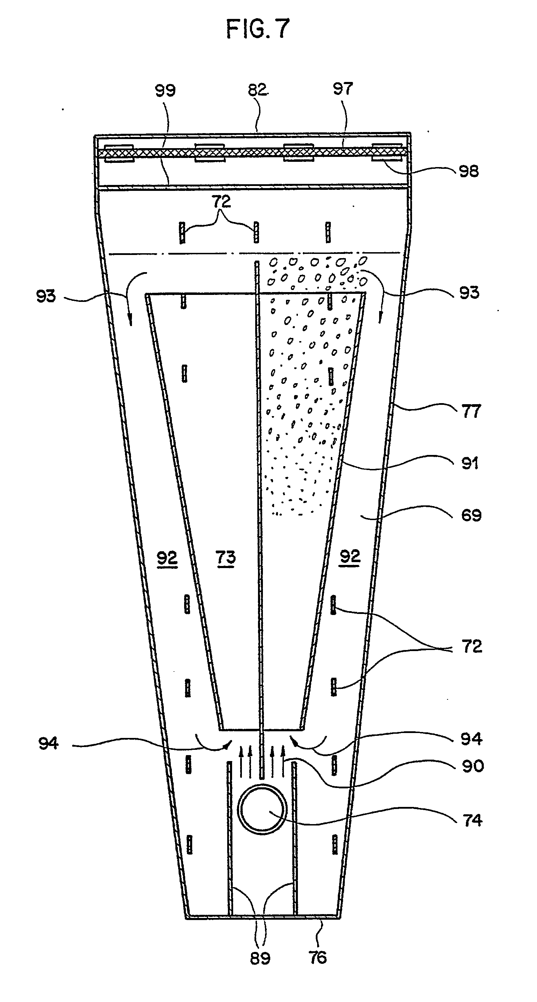

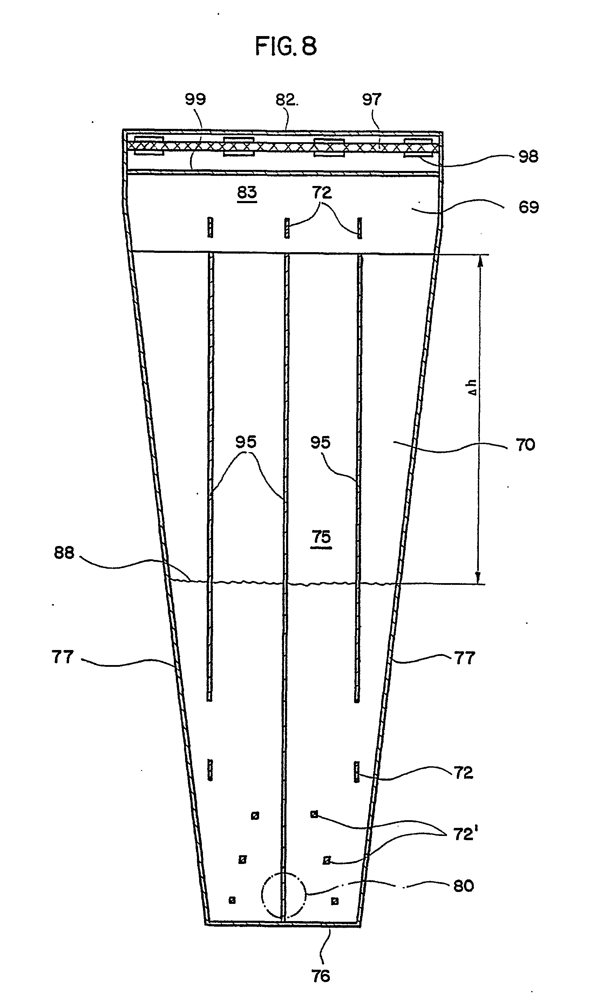

Die Fig. 5 bis 8 zeigen eine dritte bevorzugte Ausführungsform der erfindungsgemässen Verdampfungseinrichtung, deren Querschnitt im Gegensatz zu den vorangehend beschriebenen Verdampfungseinrichtungen einen rechteckigen Querschnitt aufweist. Die Fig. 5 zeigt die Ansicht auf eine Vierergruppe von Verdampfungseinrichtungen und die Fig. 6 ist ein Schnitt entlang der Linie VI-VI der Fig. 5. Aus der Fig. 6 ist ersichtlich, dass die erste der vier Verdampfungseinrichtungen im wesentlichen drei ebene Wände 69, 70 und 71 aufweist. Diese trapezförmigen Wände sind mittels weiter unten mit Bezug auf die Fig. 7 und 8 beschriebenen Distanzhaltern 72 auf Abstand voneinander gehalten. Die Wände 69 und 70 begrenzen eine Verdampfungskammer 73, welcher über einen Eingang 74 die zu verdampfende Flüssigkeit zugeführt werden kann. Die Wände 70 und 71 begrenzen eine Fallkammer 75. Die Unterseite der Verdampfungskammer 73 und der Fallkammer 75 ist durch einen gemeinsamen Boden 76 und die Seiten sind durch gemeinsame Seitenwände 77 abgeschlossen.

Die zweite der vier in der Fig. 6 gezeigten Verdampfungseinrichtungen umfasst die Wand 71 und die zwei Wände 78 und 79, wobei die mit der ersten Verdampfungseinrichtung gemeinsame Wand 71 sowie die Wand 78 die Verdampfungskammer 73' und die Wände 78 und 79 die Fallkammer 75' der zweiten Verdampfungseinrichtung begrenzen. Im unteren Bereich der Fallkammer 75 der ersten Verdampfungseinrichtung ist in der gemeinsamen Wand 71 eine Oeffnung 80 vorgesehen, die als Ausgang der Fallkammer 75 der ersten Verdampfungseinrichtung und gleichzeitig als Eingang der Verdampfungskammer 73' der zweiten Verdampfungseinrichtung dient. Auf ähnliche Weise sind die beiden anderen Verdampfungseinrichtungen aufgebaut, wobei eine weitere Wand 81 diesen beiden Verdampfungseinrichtungen gemeinsam ist. Der obere Rand der Wand 71 ist zweimal abgewinkelt und begrenzt zusammen mit dem Deckwand 82 umfassenden oberen Bereich der Wand 69 eine Dampfsammelkammer 83. Im abgewinkelten Bereich der Wand 69 befindet sich eine Austrittsöffnung 84 mit einem daran anschliessenden und mit einem Flansch 85 versehenen Rohrstutzen 86 zum Verbinden der Dampfsammelkammer 83 mit einer nicht dargestellten Kondensationskammer.

Die über den Eingang 74 der ersten Verdampfungseinrichtung zugeführte, zu verdampfende Flüssigkeit steigt in der Verdampfungskammer 73 hoch bis zum oberen Rand 87 der Wand 70 und fällt dann von dort bis zum Flüssigkeitsspiegel 88 innerhalb der Fallkammer 75. Die Höhendifferenz Δ h ist abhängig vom Unterschied zwischen den Drücken in der ersten Verdampfungseinrichtung und der zweiten Verdampfungseinrichtung.

Die Fig. 7, welche einen Schnitt entlang der Linie VII-VII der Fig. 6 ist, zeigt das Innere der Verdampfungskammer 73, die durch die Wand 69, die nicht sichtbare Wand 70, die Seitenwände 77 und den Boden 76 begrenzt ist. Im unteren Teil der Verdampfungskammer 70 und im Bereich des Einganges 74 sind zwei Leitbleche 79 angeordnet, die die eintretende Flüssigkeit in eine durch Pfeile 90 angedeutete Strömung nach oben umleiten. Die Verdampfungskammer 73 wird genau betrachtet durch die Wände 69 und 70 sowie durch zwei quer dazu angeordnete Trennwände 91 begrenzt, deren Abstand von unten nach oben zunimmt. Dadurch vergrössert sich der Querschnitt der Verdampfungskammer 73 von unten nach oben allmählich. Die durch die Seitenwände 77, die Trennwände 91 und einen Teil der Wände 69 und 70 begrenzten Räume bilden Rückführkanäle 92, durch welche ein Teil der dampfbläschenfreien Flüssigkeit von oben in den unteren Teil der Verdampfungskammer 73 zurückgeführt wird. Diese Rückführung ist durch Pfeile 93 und 94 angedeutet.

Die Fig. 8 ist ein Schnitt entlang der Linie VIII-VIII der Fig. 6 und zeigt das Innere der Fallkammer 75. In dieser Figur sind der obere Teil der Wand 69 und die Deckwand 82, welche die Dampfsammelkammer 83 begrenzen, die vollständige Wand 70, die Seitenwände 77 und der Boden 76 sichtbar. Wie weiter oben erwähnt sind die Wände 70 und 71 durch Distanzhalter 72 und 72' auf Abstand gehalten. Dem gleichen Zweck dienen auch vertikal angeordnete Leitbleche 95, wobei sich das mittlere Leitblech vom oberen Rand 87 der Wand 70 bis zum Boden 76 erstreckt.

Die Dampfsammelkammer 83 ist, wie aus der Fig. 6 ersichtlich, durch eine schräg angeordnete Zwischenwand 96 und ein Maschensieb 97 unterteilt. Das Maschensieb 97 ist auf dem oberen Rand der Zwischenwand 96 und auf am oberen Teil der Wand 69 befestigten Trägern 98 abgestützt. Ein am oberen Teil der Wand 69 befestigtes Tropfblech 99 verhindert, dass allfällig vom Maschensieb 97 abtropfendes Destillat in die Verdampfungskammer 73 gelangt. Durch das Tropfblech 99 wird das allfällig abtropfende Destillat in die Fallkammer 75 umgeleitet.

Aus den Fig. 5 und 6 ist ersichtlich, dass die Vierergruppe von Verdampfungseinrichtungen durch eine Anzahl von Bändern 100 umgeben ist. Diese Bänder verhindern ein Ausbauchen der Wände, während der Zeit, in welcher kein Unterdruck in den Verdampfungseinrichtungen vorhanden ist.

Der Querschnitt des Rückführkanals 34, 67 bzw.

92 ist vorzugsweise so gross, dass auch bei maximal möglicher Rückströmmenge der Strömungsdruckverlust im Rückführkanal klein ist verglichen mit der Druckdifferenz zwischen den benachbarten Verdampfungseinrichtungen. Damit wird der Druck am Eintritt der folgenden Verdampfungseinrichtung immer bestimmt durch die reine Flüssigkeitssäule im Rückführkanal und ist unabhängig vom Dampfanteil in der Verdampfungskammer.

## Patentansprüche

1. Verdampfungseinrichtung mit einer ersten Kammer (2; 54; 73) zum teilweisen Verdampfen einer ihr über einen im unteren Bereich der ersten Kammer angeordneten Eingang (I2; 53: 74) zugeführten, zu verdampfenden Flüssigkeit, einer zweiten Kammer (6; 65; 75) zum Aufnehmen der den oberen Rand der ersten Kammer überströmenden Flüssigkeit, welche zweite Kammer einen im unteren Bereich derselben angeordneten Ausgang (I7; 6I; 80) für die übergeströmte Flüssigkeit aufweist, und einer oberhalb der ersten und zweiten Kammer angeordneten dritten Kammer (I9; 63; 83) zum Sammeln des Dampfes, welche dritte Kammer eine Austrittsöffnung (23; 64; 84) für den Dampf aufweist, dadurch gekennzeichnet, dass ein Rückführkanal (34; 67; 92) zum Rückführen eines dampfblasenfreien Teiles der Flüssigkeit vom oberen Bereich der ersten Kammer (2; 54; 73) in den unteren Bereich derselben vorhanden ist.

2. Einrichtung nach Anspruch I, dadurch gekennzeichnet, dass der Rückführkanal durch eine von einer Ausbuchtung (35) im oberen Bereich der ersten Kammer (2) in die Nachbarschaft des Einganges (I2) der ersten Kammer führende Rohrleitung (34) gebildet ist.

3. Einrichtung nach Anspruch 2, dadurch gekennzeichnet, dass die durch ein Rohr (5) gebildete zweite Kammer (6) innerhalb der ersten Kammer (2) angeordnet ist und sich bis etwa zur Mitte der Ausbuchtung (35) von unten nach oben erstreckt.

4. Einrichtung nach Anspruch I, dadurch gekennzeichnet, dass die erste Kammer (54) innerhalb der zweiten Kammer (65) angeordnet ist, dass ein Eingangsrohr (52) zum Zuführen der Flüssigkeit zum Eingang (53) der ersten Kammer (54) vorhanden ist, dass ein Hohlkörper (56) die erste Kammer (54) und das innere Ende des Eingangsrohres (52) umgibt, und dass der Rückführkanal (67) durch den ringförmigen Raum zwischen dem Hohlkörper (56) und der ersten Kammer (54) gebildet ist.

5. Einrichtung nach Anspruch 4, dadurch gekennzeichnet, dass das innere Ende des Eingangsrohres (52) zum Erreichen einer höheren Strömungsgeschwindigkeit und einer Saugwirkung im unteren Bereich des ringförmigen Rückführkanals (67) nach oben hin verjüngt ist.

6. Einrichtung nach Anspruch 5, dadurch gekennzeichnet, dass die zweite Kammer (65) durch ein zwei Abschnitte (58, 59) aufweisendes Rohr begrenzt ist, und dass ein Teil des oberen Rohrabschnittes (58) mit dem grösseren Durchmesser im wesentlichen die dritte Kammer (63) zum Sammeln des Dampfes begrenzt.

7. Einrichtung nach Anspruch I, dadurch gekennzeichnet, dass die erste Kammer (73) und die zweite Kammer (75) je einen rechteckigen Querschnitt aufweisen, nebeneinander angeordnet sind, welcher Querschnitt sich nach oben vergrössert, dass die erste Kammer (73) im wesentlichen durch eine erste ebene Wand (69) und eine zweite ebene Wand (70) und die zweite Kammer (75) durch die zweite ebene Wand (70) und eine dritte ebene Wand (7I) begrenzt sind, dass die erste Kammer (73) zusätzlich durch wenigstens eine zwischen der ersten Wand (69) und der zweiten Wand (70) angeordnete Trennwand (9I) begrenzt ist und dass der Rückführkanal (92) durch einen Teil der ersten Wand (69), einen Teil der zweiten Wand (70), die Trennwand (9I) und eine Seitenwand (77) begrenzt ist.

8. Einrichtung nach Anspruch 7, dadurch gekennzeichnet, dass im Bereich des Einganges (74) der ersten Kammer (73) zwei im wesentlichen parallel zueinander verlaufende Leitbleche (89) zum Leiten der Flüssigkeit in die erste Kammer (73) zwischen der ersten Wand (69) und der zweiten Wand (70) angeordnet sind.

9. Anlage zum Entsalzen von Meerwasser mit einer Anzahl Verdampfungseinrichtungen nach einem der vorangehenden Ansprüche I bis 8, mit einer Heizeinrichtung (42) zum Erwärmen des Meerwassers, dadurch gekennzeichnet, dass der Eingang (I2; 53; 74) der ersten Kammer (2; 54; 73) der ersten Verdampfungseinrichtung mit der Heizeinrichtung (42) verbunden ist, dass der Ausgang (I7; 6I; 80) der ersten bis vorletzten Verdampfungseinrichtung jeweilen mit dem Eingang (I2; 53; 74) der nachfolgenden Verdampfungseinrichtung verbunden ist und dass der Ausgang (I7; 6I; 80) der letzten Verdampfungseinrichtung über ein mindestens I0 m langes, vertikal angeordnetes Steigrohr (48) mit einem Auffangbehälter (49) verbunden ist.1

## Claims

1. Evaporating apparatus having a first chamber (2; 54; 73) for the partial evaporation of a liquid to be evaporated, supplied to it over an inlet (12; 53: 74) disposed in the lower region of the first chamber, a second chamber (6; 65; 75) for receiving the liquid overflowing the top edge of the first chamber, which second chamber has an outlet (17; 61; 80) disposed in the lower region of the same for the overflowed liquid, and a third chamber (19; 63; 83) disposed above the first and second chambers for collecting the vapour, which third chamber has an exhaust opening (23; 64; 84) for the vapour, characterized in that there is a return duct (34; 67; 92) for returning a vapour-bubble-free portion of the liquid from the upper region of the first chamber (2; 54; 73) into the lower region of the same.

2. Apparatus according to claim 1, characterized in that the return duct is formed by a pipeline (34) leading from a salient (35) in the upper region of the first chamber (2) into the vicinity of the inlet (12) of the first chamber.

3. Apparatus according to claim 2, characterized in that the second chamber (6) formed by a pipe (5) is disposed within the first chamber (2) and extends upward to about the middle of the salient (35).

4. Apparatus according to claim 1, characterized in that the first chamber (54) is disposed within the second chamber (65), that there is an inlet pipe (52) for supplying the liquid to the inlet (53) of the first chamber (54), that a hollow body (56) surrounds the second chamber (55) and the inner end of the inlet pipe (52), and that the return duct (67) is formed by the annular space between the hollow body (56) and the first chamber (54).

5. Apparatus according to claim 4, characterized in that the inner end of the inlet pipe (52) is tapered upwardly for achieving a higher rate of flow and a suction effect in the lower region of the annular return duct (67).

6. Apparatus according to claim 5, characterized in that the second chamber (65) is bounded by a pipe having two sections (58, 59), and that part of the upper pipe section (58) with the larger diameter substantially bounds the third chamber (63) for collecting the vapour.

7. Apparatus according to claim 1, characterized in that the first chamber (73) and the second chamber (75) each have a rectangular cross-section, are disposed adjacent to one another, which cross-section grows larger upward, that the first chamber (73) is bounded substantially by a first plane wall (69) and a second plane wall (70) and the second chamber (75) by the second plane wall (70) and a third plane wall (71), that the first chamber is additionally bounded by at least one dividing wall (91) disposed between the first wall (69) and the second wall (70), and that the return duct (92) is bounded by a portion of the first wall (69), a portion of the second wall (70), the dividing wall (91), and a sidewall (77).

8. Apparatus according to claim 7, characterized in that two baffles (89) running substantially parallel to one another are disposed in the region of the inlet (74) of the first chamber (73) for leading the liquid into the first chamber (73) between the first wall (69) and the second wall (70).

9. Installation for the desalinization of sea water having a number of evaporating apparatuses according to one of the preceding claims 1 to 8, having a heating arrangement (42) for heating the sea water, characterized in that the inlet (12; 53; 74) of the first chamber (2; 54; 73) of the first evaporating apparatus is connected to the heating arrangement (42), that the outlet (17; 61; 80) of the first to penultimate evaporating aparatus is connected in each instance to the inlet (12; 53; 74) of the following evaporating apparatus, and that the outlet (17; 61; 80) of the last evaporating apparatus is connected to a collecting container (49) via a vertically disposed standpipe (48) at least 10 m. long.

**Revendications**

1. Dispositif d'évaporation comprenant une première chambre (2; 54; 73) pour l'évaporation partielle d'un liquide à évaporer amené par une entrée (12; 53; 74) qui lui est dévolue dans la région inférieure de la première chambre, une deuxième chambre (6; 65; 75) pour recevoir le liquide qui déborde par-dessus le bord supérieur de la première chambre, cette deuxième chambre présentant, disposée dans sa région inférieure, une sortie (17; 61; 80) pour le liquide y ayant débordé, et une troisième chambre (19; 63; 83) disposée au-dessus des première et deuxième chambres pour recevoir la vapeur, cette troisième chambre présentant une ouverture de sortie (23; 64; 84) pour la vapeur, caractérisé en ce qu'un canal de retour (34; 67; 92) est établi pour ramener une partie du liquide exempte de bulles de vapeur depuis la région supérieure de la première chambre (2; 54; 73) dans la région inférieure de celle-ci.

2. Dispositif selon la revendication 1, caractérisé en ce que le canal de retour est constitué d'un conduit (34) menant depuis un élargissement (35) dans la région supérieure de la première chambre (2) jusqu'au voisinage de l'entrée (12) de la première chambre.

3. Dispositif selon la revendication 2, caractérisé en ce que la deuxième chambre (6) formée par un tube (5) est disposée à l'intérieur de la première chambre (2) et s'étend de bas en haut approximativement jusqu'au milieu de l'élargissement (35).

4. Dispositif selon la revendication 1, caractérisé en ce que la première chambre (54) est disposée à l'intérieur de la deuxième chambre (65), en ce qu'un tube d'entrée (52) est établi pour amener le liquide à l'entrée (53) de la première chambre (54), en ce qu'un corps creux (56) entoure la première chambre (54) et l'extrémité intérieur du tube d'entrée (52), et en ce que le canal de retour (67) est formé par l'espace annulaire entre le corps creux (56) et la première chambre (54).

5. Dispositif selon la revendication 4, caractérisé en ce que l'extrémité intérieure du tube d'entrée (52) est rétrécie vers le haut pour obtenir une vitesse de circulation plus élevée et un effet d'aspiration dans la région inférieure du canal de retour annulaire (67).

6. Dispositif selon la revendication 5, caractérisé en ce que la deuxième chambre (65) est délimitée par un tube présentant deux tronçons (58, 59), et en ce qu'une partie du tronçon de tube supérieur (58) qui présente un diamètre plus grand, délimite essentiellement la troisième chambre (63) qui recueille la vapeur.

7. Dispositif selon la revendication 1, caractérisé en ce que la première chambre (73) et la deuxième chambre (75) présentent chacune une section droite rectangulaire et sont disposées l'une à côté de l'autre, cette section droite rectangulaire s'agrandissant vers le haut, en ce que la première chambre (73) est essentiellement délimitée par une première paroi plate (69) et une deuxième paroi plate (70), tandis que la deuxième chambre (75) est délimitée par la deuxième paroi plate (70) et une troisième paroi plate (71), en ce que la première chambre (73) est délimitée de plus par au moins une paroi séparatrice (91) qui est disposée entre la première paroi (69) et la deuxième paroi (70), et en ce que le canal de retour (92) est délimité par une partie de la première paroi (69), une partie de la deuxième paroi (70), la paroi séparatrice (91) et une paroi latérale (77).

8. Dispositif selon la revendication 7, caractérisé en ce que dans la région de l'entrée (74) de la première chambre (73) se trouvent disposées deux tôles conductrices (89) s'étendant essentiellement parallèlement l'une à l'autre pour conduire le liquide dans la première chambre (73) entre la première paroi (69) et la deuxième paroi (70).

9. Installation pour le dessalement de l'eau de mer, comprenant une pluralité de dispositifs d'évaporation selon l'une des revendications précédentes 1 à 8, comprenant un dispositif de chauffage (42) pour chauffer l'eau de mer, caractérisée en ce que l'entrée (12; 53; 74) de la première chambre (2; 54; 73) du premier dispositif d'évaporation est reliée au dispositif de chauffage (42), en ce que la sortie (17; 61; 80) du premier à l'avant-dernier dispositif d'évaporation est chaque fois reliée avec l'entrée (12; 53; 74) du dispositif d'évaporation suivant, et en ce que la sortie (17; 61; 80) du dernier dispositif d'évaporation est reliée avec un récipient collecteur (49) par l'intermédiaire d'un tube ascendant (48) disposé verticalement et ayant au moins 10 m de long.

EP 0 214 934 B1

FIG. 1

FIG.2

FIG.3

# FIG. 4

# FIG. 5

## FIG.6

## FIG. 7

# FIG. 8